# EUROPEAN PATENT SPECIFICATION

(11) **EP 4 156 354 B1**
(45) Date of publication and mention of the grant of the patent: **04.11.2026**
(21) Application number: 20942263.3
(22) Date of filing: 28.12.2020
(51) Int. Cl.: H01M 10/04, H01M 10/0585, H01M 10/613, H01M 10/654, H01M 50/533, H01M 10/0525, H01M 10/655

(54) **CELL, METHOD FOR MANUFACTURING CELL, AND BATTERY**
ZELLE, VERFAHREN ZUR HERSTELLUNG EINER ZELLE UND BATTERIE
CELLULE, PROCÉDÉ DE FABRICATION DE CELLULE ET BATTERIE

(30) Priority: 22.06.2020 CN 202010581209
(43) Date of publication of application: 29.03.2023
(73) Proprietor: Battero Tech Corporation Limited, Shanghai 201400 (CN)
(72) Inventor: JIANG, Deshun, Shanghai 201400 (CN); ZHANG, Wutang, Shanghai 201400 (CN)
(74) Representative: Novagraaf Group
(86) International application number: PCT/CN2020/139887
(87) International publication number: WO 2021/258694

(56) References cited:
- EP-A1- 1 826 843
- EP-A1- 2 330 665
- CN-A- 102 088 105
- CN-A- 107 425 198
- CN-A- 109 273 658
- CN-A- 110 635 162
- CN-A- 111 653 818
- CN-U- 212 113 913
- US-A1- 2019 006 659

## Description

### Technical Field

The present disclosure relates to battery production and manufacturing, and particularly to a cell, a method for manufacturing a cell, and a battery.

### Background Art

At present, there is no uniform industry standard for the dimension of the lithium-ion secondary power battery, and the dimension and model of the power battery are largely depend on the design of battery packs. For a strip-shaped power battery with a large length-to-width ratio, the tabs of such batteries usually arranged on one or two short sides of the power battery. Apparently, such configuration leads to an overlong current transmission path, causing internal resistance increase, uneven current density and temperature distribution of the power battery.

EP2330665A1 discloses a secondary battery is provided, the secondary battery including a first electrode plate having a first electrode coating portion and a non-coated portion that is a portion in which the first electrode coating portion is not formed, on at least one surface; a second electrode plate having a second electrode coating portion on at least one surface; and a separator interposed between the first electrode plate and the second electrode plate and insulating the first electrode plate and the second electrode plate from each other, wherein the first electrode plate and the second electrode plate are of the same size.

### Summary

The present invention defines a cell according to independence claim 1 and a method for manufacturing a cell according to independent claim 8, which can increase current conduction paths and reduce an electron conduction distance of each layer of electrode sheet, thereby achieving the effects of reducing the internal resistance of the battery and equalizing the current density, and improving the heat dissipation effect in the battery operation process. Dependent claims define further advantageous embodiments of the invention.

The beneficial effects of the embodiments of the present disclosure include, for example:
for the cell, the positive electrode current collector is provided on one of the first long sides and the first tab is provided on one of the first short sides of each positive electrode sheet, the negative electrode current collector is provided on one of the second long sides and the second tab is provided on one of the second short sides of each negative electrode sheet. By providing the positive electrode current collector and the negative electrode current collector on the long sides, the current conduction channels can be increased, so that the current distribution is more uniform, the resistance is reduced, which is beneficial to improving the heat dissipation effect.

In the method for manufacturing the cell, by providing the positive electrode current collector on the long side of each positive electrode sheet, providing the negative electrode current collector on the long side of each negative electrode sheet, connecting the positive electrode current collector and the first tab, and connecting the negative electrode current collector and the second tab, the manufacturing process is simple, the current conduction paths can be increased, and the electron conduction distance of each layer of electrode sheet can be reduced, thus achieving the purposes of reducing the internal resistance of the cell, equalizing the current density, and improving the heat dissipation effect in the battery operation process.

The battery, including the above cell, is easy to assemble, and facilitates reducing the internal resistance of the battery, equalizing the current density, and improving the heat dissipation effect in the battery operation process.

### Brief Description of Drawings

In order to more clearly illustrate the technical solutions of embodiments of the present disclosure, accompanying drawings which need to be used in the embodiments will be introduced below briefly. It should be understood that the accompanying drawings below merely show some embodiments of the present disclosure, and therefore should not be considered as limitation to the scope. Those ordinarily skilled in the art still could obtain other relevant accompanying drawings according to these accompanying drawings, without using creative effort.
FIG. 1 is a structural schematic view of a cell provided in an embodiment of the present disclosure;
FIG. 2 is a structural schematic view of a positive electrode sheet of the cell provided in an embodiment of the present disclosure from a first angle of view;
FIG. 3 is a structural schematic view of the positive electrode sheet of the cell provided in an embodiment of the present disclosure from a second angle of view;
FIG. 4 is a structural schematic view of a negative electrode sheet of the cell provided in an embodiment of the present disclosure from a first angle of view;
FIG. 5 is a structural schematic view of the negative electrode sheet of the cell provided in an embodiment of the present disclosure from a second angle of view;
FIG. 6 is a structural top view obtained from a first laminating (stacking) mode of the cell provided in an embodiment of the present disclosure;
FIG. 7 is a structural top view obtained from a second laminating mode of the cell provided in an embodiment of the present disclosure;
FIG. 8 is a sectional schematic view of a single-sheet lamination structure of the cell provided in an embodiment of the present disclosure;
FIG. 9 is a sectional schematic view of a structure of a double-sided positive electrode sheet provided in an embodiment of the present disclosure;
FIG. 10 is a sectional schematic view of a structure of a single-sided positive electrode sheet provided in an embodiment of the present disclosure;
FIG. 11 is a sectional schematic view of a structure of a double-sided negative electrode sheet provided in an embodiment of the present disclosure;
FIG. 12 is a sectional schematic view of a structure of a single-sided negative electrode sheet provided in an embodiment of the present disclosure;
FIG. 13 is a sectional schematic view of a structure of a first thermal compound unit provided in an embodiment of the present disclosure;
FIG. 14 is a sectional schematic view of a structure of a second thermal compound unit provided in an embodiment of the present disclosure;
FIG. 15 is a sectional schematic view of a structure of a third thermal compound unit provided in an embodiment of the present disclosure;
FIG. 16 is a structural schematic view of a cell provided in an embodiment of the present disclosure from a first angle of view;
FIG. 17 is a structural schematic view of a cell provided in an embodiment of the present disclosure from a second angle of view; and
FIG. 18 is a sectional schematic view of a structure of another cell provided in an embodiment of the present disclosure.

Reference signs: 100-positive electrode sheet; 101-first long side; 103-first short side; 105-first coating; 107-first base material; 110-positive electrode current collector; 130-first tab; 140-first connecting substrate; 150-first margin base material; 200-negative electrode sheet; 201-second long side; 203-second short side; 205-second coating; 207-second base material; 210-negative electrode current collector; 230-second tab; 240-second connecting substrate; 250-second margin base material; 300-cell; 310-separator; 10-double-sided positive electrode sheet; 20-double-sided negative electrode sheet; 30-single-sided positive electrode sheet; 40-single-sided negative electrode sheet; 50-first thermal compound unit; 60-second thermal compound unit; 70-third thermal compound unit.

### Detailed Description of Embodiments

In order to make objectives, technical solutions, and advantages of the embodiments of the present disclosure clearer, the technical solutions in the embodiments of the present disclosure will be described clearly and completely below in conjunction with the accompanying drawings in the embodiments of the present disclosure, and apparently, some but not all embodiments of the present disclosure are described. Generally, components in the embodiments of the present disclosure described and shown in the accompanying drawings herein may be arranged and designed in different configurations.

Therefore, the detailed description below of the embodiments of the present disclosure provided in the accompanying drawings represents chosen embodiments of the present disclosure.

It should be noted that similar reference signs and letters represent similar items in the following accompanying drawings, therefore, once a certain item is defined in one accompanying drawing, it is not needed to be defined or explained in subsequent accompanying drawings.

In the description of the present disclosure, it should be noted that the orientation or positional relationship indicated by the terms "upper", "lower", "inner", "outer", etc., if appear, are based on the orientation or positional relationship shown in the accompanying drawings, or the orientation or positional relationship in which the product is usually placed in use, and it is only for facilitating describing the present disclosure and simplifying the description, rather than indicating or implying that the related device or element must be in a specific orientation, or constructed or operated in a specific orientation, and therefore it cannot be understood as a limitation to the present disclosure.

Besides, terms such as "first" and "second" are merely for distinguishing the description but should not be construed as indicating or implying importance in the relativity.

The electrification of travel and clean energy in the future are the development trends of the automobile industry in the future. China has encouraged the development of the electric vehicle industry through subsidies, dual-credit policy and so on, and Norway, the United Kingdom, Japan, the United States, etc. have shown electrification schedules one after another. In recent years, the sales volume of electric vehicles has shown non-linear growth. In 2017, the global sales of electric vehicles exceeded one million. At present, the electric vehicle market has begun to erupt in full, and the market prospect is promising. As the core power component of the power battery, the lithium-ion battery has become a key factor in the marketization of electric vehicles.

For the current lithium ion secondary power batteries, especially the strip-shaped power batteries with a relatively large length-to-width ratio, the conventional processes mostly adopt the mode of providing a tab on one or two short sides of the power battery. Due to the overlong current transmission path, this configuration easily causes the problems of internal resistance increase, uneven current density and temperature distribution of the power battery. Therefore, how to reduce the internal resistance of the power battery with a large length-to-width ratio, equalize the current density and temperature distribution of the power battery, and improve the power performance of the power battery as much as possible, while ensuring other battery performances such as energy density, is a difficult problem.

In order to overcome the defects in the prior art, the present disclosure provides the cell 300, a method for manufacturing the cell 300, and a battery including the cell 300, which are especially suitable for configuring a strip-shaped power battery with a relatively large length-to-width ratio, and can reduce the internal resistance of the power battery with a large length-to-width ratio, equalize the current density and temperature distribution of the power battery, and improve the heat dissipation effect as much as possible, while ensuring other battery performances such as energy density as much as possible.

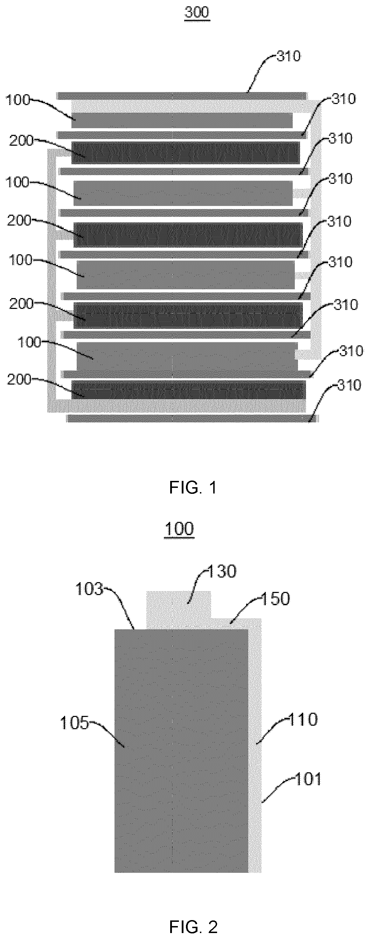

Referring to FIG. 1, the present embodiment provides a cell 300 suitable for configuring a strip-shaped power battery with a large length-to-width ratio. The cell 300 includes positive electrode sheets 100, negative electrode sheets 200, and separators 310. A plurality of positive electrode sheets 100 and a plurality of negative electrode sheets 200 are alternately stacked, the separators 310 are interposed between the plurality of positive electrode sheets 100 and the plurality of negative electrode sheets 200 that are adjacent to each other, and the separator 310 plays an insulating and isolating role, that is, in the cell 300, a stacking order from bottom to top is the positive electrode sheet 100, the separator 310, the negative electrode sheet 200, the separator 310, the positive electrode sheet 100, and the separator 310, and so on in sequence. It should be noted that, according to an actual situation, a bottommost layer of the cell 300 may be the separator 310 and also may be the positive electrode sheet 100 or the negative electrode sheet 200, and a topmost layer may be the separator 310 and also may be the positive electrode sheet 100 or the negative electrode sheet 200, which is not specifically limited herein.

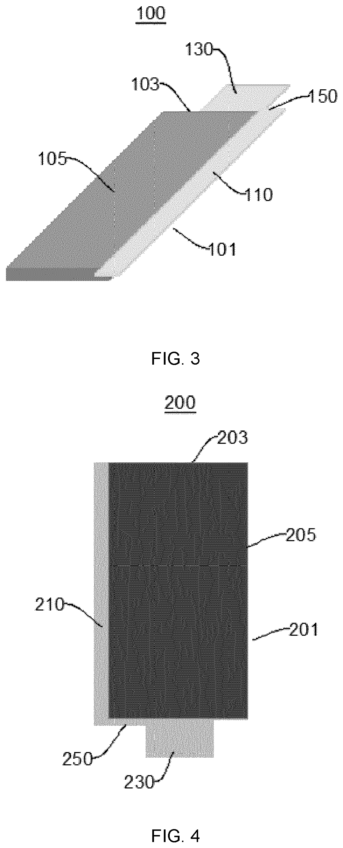

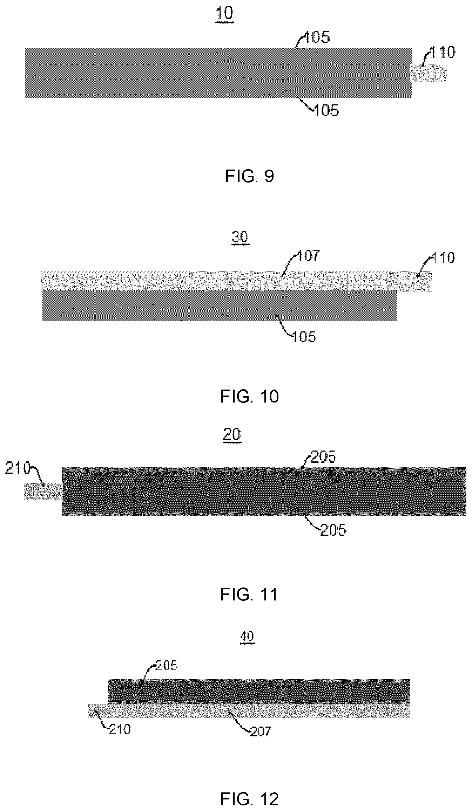

Referring to FIG. 2 and FIG. 3, each positive electrode sheet 100 is shaped as a rectangular sheet, and includes two first long sides 101 provided opposite to each other and two first short sides 103 provided opposite to each other, wherein one of the first long sides 101 is provided with a positive electrode current collector 110, one of the first short sides 103 is provided with a first tab 130, and the positive electrode current collector 110 is electrically connected to the first tab 130; that is, one long side of the positive electrode sheet 100 is provided with the positive electrode current collector 110, and one short side is provided with the first tab 130. Optionally, the positive electrode sheet 100 uses an aluminum foil as a first base material 107 (see FIG. 10). The positive electrode sheet 100 includes two surfaces, i.e., a front surface and a back surface, formed by the two first long sides 101 and the two first short sides 103. At least one surface of the positive electrode sheet 100 is provided with a first coating 105 and a margin that is not covered by the first coating 105. The margin is arranged at one of the two first long sides 101, and the margin serves as the positive electrode current collector 110 of the positive electrode sheet 100. One of the first short sides 103 of the positive electrode sheet 100 is provided with the first tab 130, and the first tab 130 is electrically connected to the positive electrode current collector 110. In the present embodiment, the first tab 130 is provided in the middle of one of the first short sides 103, the first tab 130 has a width smaller than that of the first short side 103, the first short side 103 is provided with a section of first margin base material 150, and the first margin base material 150 is located between the first tab 130 on the first short side 103 and the positive electrode current collector 110 and is configured to implement electrical connection between the first tab 130 and the positive electrode current collector 110. In the present embodiment, one first long side 101 and one first short side 103 of the positive electrode sheet 100 are respectively provided with a margin; specifically, the margin on the first long side 101 serves as the positive electrode current collector 110; and the margin (that is, the first margin base material 150) on the first short side 103 serves as an electrical conduction body for the first tab 130 and the positive electrode current collector 110. The first margin base material 150 may be a metal sheet. Optionally, the first margin base material 150 is provided thereon with a conductive coating, so as to enhance the electrical connection performance of the first tab 130 and the positive electrode current collector 110. The two margins (namely, the margin on one first long side 101 and the first margin base material 150 on one first short side 103) on the same positive electrode sheet 100 may be formed at one time, which simplifies the production process. In addition, the margins are beneficial to increasing current conduction channels and reducing an electrical conduction distance of each layer of electrode sheet, so as to achieve the purposes of reducing the internal resistance and equalizing the current density, and also facilitate equalizing the temperature and improving the heat dissipation effect. Of course, in other optional embodiments, the first tab 130 and the positive electrode current collector 110 also may realize the electrical connection in other manners, such as metal wire connection, which are not specifically limited herein.

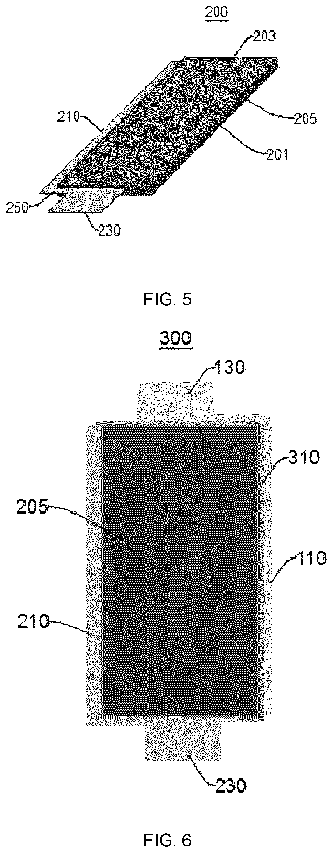

Similarly, referring to FIG. 4 and FIG. 5, each negative electrode sheet 200 is shaped as a rectangular sheet, and includes two second long sides 201 provided opposite to each other and two second short sides 203 provided opposite to each other, wherein one of the second long sides 201 is provided with a negative electrode current collector 210, one of the second short sides 203 is provided with a second tab 230; and the negative electrode current collector 210 is electrically connected to the second tab 230. Optionally, each negative electrode sheet 200 uses a copper foil as a second base material 207 (see FIG. 11). At least one surface of the negative electrode sheet 200 is provided with a second coating 205 and a margin that is not covered by the second coating 105. The margin is arranged at one of the two second long sides 201, and the margin serves as the negative electrode current collector 210 of the negative electrode sheet 200. One of the second short sides 203 of the negative electrode sheet 200 is provided with the second tab 230, and the second tab 230 is electrically connected to the negative electrode current collector 210. In the present embodiment, the second tab 230 is provided in the middle of one of the second short sides 203, the second tab 230 has a width smaller than that of the second short side 203. The second short side 203 is provided with a section of second margin base material 250, and the second margin base material 250 is located between the second tab 230 on the second short side 203 and the negative electrode current collector 210 and is configured to implement electrical connection between the second tab 230 and the negative electrode current collector 210, and the second margin base material 250 may be a metal sheet. Optionally, the second margin base material 250 is provided thereon with a conductive coating, so as to enhance the electrical connection performance of the second tab 230 and the negative electrode current collector 210, then the electrical connection is more stable and reliable. In the present embodiment, one second long side 201 and one second short side 203 of the negative electrode sheet 200 are respectively provided with a margin; specifically, the margin on the second long side 201 serves as the negative electrode current collector 210; and the margin (that is, the second margin base material 250) on the second short side 203 serves as an electrical conduction body for the second tab 230 and the negative electrode current collector 210. The two margins on the same negative electrode sheet 200 may be formed at one time, which simplifies the production process. In addition, the margins are beneficial to increasing current conduction channels and reducing an electrical conduction distance of each layer of electrode sheet, so as to achieve the purposes of reducing the internal resistance of the battery and equalizing the current density, and also facilitate improving the heat dissipation effect. Of course, in other optional embodiments, the second tab 230 and the negative electrode current collector 210 also may realize the electrical connection in other manners, such as metal wire connection, which are not specifically limited herein.

After the plurality of positive electrode sheets 100 and the plurality of negative electrode sheets 200 are alternately stacked. The plurality of positive electrode current collectors 110 are connected to each other, to realize the electrical conduction. The plurality of negative electrode current collectors 210 are connected to each other, to realize the electrical conduction. With such configuration, the current conduction channels of the positive electrode sheets 100 and the negative electrode sheets 200 are increased, which facilitates uniform current distribution, reduces the internal resistance of the cell 300, and solves the problem of uneven heating of the cell 300.

It should be noted that, for each positive electrode sheet 100, only one first long side 101 of the two first long sides 101 and one first short side of the two first short sides 103 are provided with the margin; and the other first long side 101 of the two first long sides 101 and the other first short side 103 of the two short sides 103 are not provided with the margin. For each negative electrode sheet 200, only one second long side 201 of the two second long sides 201 and one second short side 203 of the two second short sides 203 are provided with the margin; and the other second long side 201 of the two second long sides 201 and the other second short side 203 of the two second short sides 203 are not provided with the margin. It can be easily understood that, the first long side 101 has a length greater than that of the first short side 103, and the second long side 201 has a length greater than that of the second short side 203. In the present embodiment, the length of the first long side 101 is substantially equal to that of the second long side 201, and the length of the first short side 103 is substantially equal to that of the second short side 203. In addition, it should be noted that, in order to reduce the internal resistance of the cell 300 and allow the current density to be distributed more uniform, it is also possible to modify only the positive electrode sheet 100, that is, the margin is reserved on one long side of the positive electrode sheet 100 to form the positive electrode current collector 110, the first tab 130 is provided on one short side, and the first tab 130 is electrically connected to the positive electrode current collector 110 . Alternatively, only the negative electrode sheet 200 is modified, that is, the margin is reserved on one long side of the negative electrode sheet 200 to form the negative electrode current collector 210, the second tab 230 is provided on one short side, and the second tab 230 is electrically connected to the negative electrode current collector 210, then the purposes of reducing the internal resistance of the cell 300, making the current density to be distributed more uniform, and having good heat dissipation performance can also be achieved. In the present embodiment, in order to realize structural symmetry, and further reduce the internal resistance, improve the current density equalizing performance and the heat dissipation effect, the positive electrode sheet 100 and the negative electrode sheet 200 of the structure of the cell 300 are simultaneously modified.

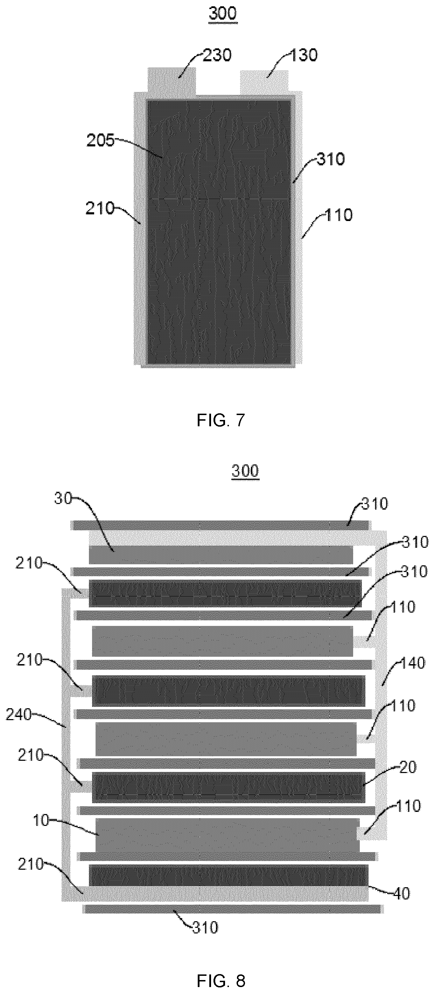

Optionally, after the plurality of positive electrode sheets 100 and the plurality of negative electrode sheets 200 are alternately stacked, the plurality of positive electrode current collectors 110 are located at the same side; and the plurality of negative electrode current collectors 210 are located at a side opposite to the side where the positive electrode current collector 110 is located. The plurality of first tabs 130 are located at the same side; and the plurality of second tabs 230 are located at a side same as or opposite to the side where the first tab 130 is located. That is, the plurality of negative electrode current collectors 210 and the plurality of positive electrode current collectors 110 are respectively located on opposite sides of two long sides, the first tabs 130 and the second tabs 230 may be respectively located on opposite sides of two short sides, as shown in FIG. 6, and also may be located on the short sides of the same side, as shown in FIG. 7, and when the first tabs 130 and the second tabs 230 are located on the short sides of the same side, the first tabs 130 and the second tabs 230 are staggered.

Referring to FIG. 8, the plurality of positive electrode current collectors 110 are connected to each other to realize the electrical conduction. Optionally, a first connecting substrate 140 is provided at one side of the plurality of positive electrode current collectors 110, where the first connecting substrate 140 is made of a conductive material, including but not limited to metal, graphite, or the like. The first connecting substrate 140 is welded or punched to each positive electrode current collector 110, respectively, so as to allow the plurality of positive electrode current collectors 110 to be electrically connected to each other. Alternatively, metal layers are sprayed or coated between the plurality of positive electrode current collectors 110, so as to allow the plurality of positive electrode current collectors 110 to be electrically connected to each other, which is not specifically limited herein. Optionally, the first connecting substrate 140 is provided substantially perpendicular to a section of the cell 300, that is, provided perpendicular to a direction of the first coating 105, so as to facilitate electrical connection between the first connecting substrate 140 and an end surface of each positive electrode current collector 110 away from the first coating 105. In the case of ensuring that all positive electrode current collectors 110 are in electrical connection, excess parts of the positive electrode current collectors 110 can be removed, so that the end surfaces of the plurality of positive electrode current collectors 110 away from the first coatings 105 are located on the same plane, in this way, the electrical connection between each positive electrode current collector 110 and the first connecting substrate 140 is facilitated, the contact areas are larger, the electrical connection performance is more stable, and at the same time, it is also beneficial to reducing the spaces occupied by the positive electrode current collectors 110, so that the structure of the cell 300 is more compact, and has a smaller volume and a lighter weight.

Similarly, the plurality of negative electrode current collectors 210 are connected to each other to realize the electrical conduction. Optionally, a second connecting substrate 240 is provided at one side of the plurality of negative electrode current collectors 210, where the second connecting substrate 240 is made of a conductive material, including but not limited to metal, graphite, or the like. The second connecting substrate 240 is welded or punched to each negative electrode current collector 210, so that the plurality of negative electrode current collectors 210 realize the electrical connection. Alternatively, metal layers are sprayed or coated between the plurality of negative electrode current collectors 210, so that the plurality of negative electrode current collectors 210 are electrically connected to each other, which is not specifically limited herein. Optionally, the second connecting substrate 240 is provided substantially perpendicular to the section of the cell 300, that is, provided perpendicular to a direction of the second coating 205, so as to facilitate electrical connection between the second connecting substrate 240 and an end surface of each negative electrode current collector 210 away from the second coating 205. In the case of ensuring that all negative electrode current collectors 210 are in electrical connection, excess parts of the negative electrode current collectors 210 can be removed, so that the end surfaces of the plurality of negative electrode current collectors 210 away from the second coatings 205 are located on the same plane, in this way, the electrical connection between each negative electrode current collector 210 and the second connecting substrate 240 is facilitated, the contact areas are larger, the electrical connection performance is more stable, and at the same time, it is also beneficial to reducing the spaces occupied by the negative electrode current collectors 210, so that the structure of the cell 300 is more compact, and has a smaller volume and a lighter weight.

In the present embodiment, all of the positive electrode current collectors 110 and the negative electrode current collectors 210 are not in contact at any part and are completely insulated and disconnected. They may be insulated and isolated through the separators 310, and also may be insulated and separated in other manners, which is not specifically limited herein. Optionally, the plurality of first tabs 130 may be connected in a welding manner, and are welded to external leads for positive tabs; and the plurality of second tabs 230 may be connected in a welding manner, and are welded to external leads for negative tabs. Certainly, it is not limited to the welding manner, and also may be punched, connecting by metal component, connecting by metal wire, or the like, so as to realize stable electrical connection.

A main assembling process of the cell 300 provided in the embodiments of the present disclosure is as follows.

The margin is reserved at any one of the first long sides 101 of the positive electrode sheet 100 to serve as the positive electrode current collector 110, the first tab 130 is provided on any one of the first short sides 103, and a section of margin (the first margin base material 150) is on the first short side 103 to serve as the electrical conduction body for the first tab 130 and the positive electrode current collector 110; and optionally, the first tab 130 also may be formed by reserving a margin. The margin is at any one of the second long sides 201 of the negative electrode sheet 200 to serve as the negative electrode current collector 210, the second tab 230 is provided on any one of the second short sides 203, and a section of margin (the second margin base material 250) is reserved on the second short side 203 to serve as the electrical conduction body for the second tab 230 and the negative electrode current collector 210. Optionally, the second tab 230 also may be formed by reserving the margin.

The plurality of positive electrode sheets 100 and the plurality of negative electrode sheets 200 are alternately stacked, and a positive electrode sheet 100 and a negative electrode sheet 200 that are adjacent are provided with the separator 310 therebetween, so that the positive electrode sheet 100 and the negative electrode sheet 200 are insulated and disconnected. After the stacking, the plurality of positive electrode current collectors 110 are located on the same side, the plurality of negative electrode current collectors 210 are located on the same side, and the plurality of positive electrode current collectors 110 and the plurality of negative electrode current collectors 210 are located on two opposite long sides respectively. After the stacking, the plurality of first tabs 130 are located on the same side, the plurality of second tabs 230 are located on the same side, and the first tabs 130 and the second tabs 230 may be located on the short sides of two opposite sides respectively, and also may be located on the short sides of the same side simultaneously.

The plurality of positive electrode current collectors 110 are electrically connected to each other by means of welding, metal spraying, and so on, the plurality of negative electrode current collectors 210 are electrically connected to each other by means of welding, metal spraying, and so on, and all the positive electrode current collectors 110 and all the negative electrode current collectors 210 are completely insulated and disconnected without any part in contact. All of the first tabs 130 are pre-welded together, and all of the second tabs 230 are pre-welded together; the cell 300 is installed into a shell, an insulating member is provided between the shell and the positive electrode current collectors 110, and an insulating member is provided between the shell and the negative electrode current collectors 210, so as to prevent the positive electrode sheets 100 or the negative electrode sheets 200 from being in contact with the shell to be short-circuited.

According to the cell 300 provided in the present embodiment, by providing the positive electrode current collector 110 on one long side of positive electrode sheet 100, providing the first tab 130 on one short side, and electrically connecting the first tab 130 to the positive electrode current collector 110; providing the negative electrode current collector 210 on one long side of negative electrode sheet 200, providing the second tab 230 on one short side, and electrically connecting the second tab 230 to the negative electrode current collector 210, the current conduction paths are increased, and the electron conduction distance of each layer of electrode sheet is reduced, thus achieving the purposes of reducing the internal resistance of the battery and equalizing the current density, and improving the heat dissipation effect in the battery operation process.

An embodiment of the present disclosure further provides a method for manufacturing a cell 300, mainly including the following steps.

S10: preparing a positive electrode sheet 100, wherein the positive electrode sheet 100 includes two first long sides 101 provided opposite to each other and two first short sides 103 provided opposite to each other, wherein one of the first long sides 101 is provided with a positive electrode current collector 110, one of the first short sides 103 is provided with a first tab 130; and the positive electrode current collector 110 is electrically connected to the first tab 130. Optionally, a positive electrode slurry is coated on a first base material 107 in accordance with grid-shaped coating, leaving a margin around four edges of the coating formed with the positive electrode slurry on the first base material 107, where the first base material 107 is optionally an aluminum foil; the positive electrode slurry on the first base material 107 is dried; and the first base material 107 is rolled and cut to obtain the positive electrode sheet 100, so that the margin at the first long side 101 of the positive electrode sheet 100 forms a positive electrode current collector 110, the margin at the first short side 103 forms a first tab 130 and a first margin base material 150, and the first tab 130 and the positive electrode current collector 110 are electrically connected to each other through the first margin base material 150. Leaving the margin on one long side and leaving the margin on one short side of the positive electrode sheet 100 can be completed at one time in the manufacturing process, then the process is simple and the manufacturing efficiency is high. It should be noted that, in the manufacturing process, the positive electrode slurry, that is, the first coating 105, is coated in the grid shape, and the coating of the positive electrode slurry leaves the margin on all four edges around the first base material 107, and in the subsequent cutting process, it is possible that only one long side of the cut first base material 107 is provided with a margin as the positive electrode current collector 110, and only one short side is provided with a margin as the first margin base material 150, so as to obtain the positive electrode sheet 100 in the present embodiment.

S20: preparing a negative electrode sheet 200, wherein the negative electrode sheet 200 includes two second long sides 201 provided opposite to each other and two second short sides 203 provided opposite to each other, wherein one of the second long sides 201 is provided with a negative electrode current collector 210, one of the second short sides 203 is provided with a second tab 230; and the negative electrode current collector 210 is electrically connected to the second tab 230. Optionally, a negative electrode slurry, i.e., a second coating 205, is coated on a second base material 207 in accordance with grid-shaped coating, leaving a margin around four edges of the coating formed with the negative electrode slurry on the second base material 207; the negative electrode slurry on the second base material 207 is dried; and the second base material 207 is rolled and cut to obtain the negative electrode sheet 200 in the present embodiment, so that the margin at the second long side 201 of the negative electrode sheet 200 forms a negative electrode current collector 210, the margin at the second short side 203 forms a second tab 230 and a second margin base material 250, and the second tab 230 and the negative electrode current collector 210 are electrically connected to each other through the second margin base material 250. The process is simple and the manufacturing efficiency is high.

S30: preparing a separator 310. A polyethylene porous film is selected as a base film, a ceramic coating and a PVDF sticky coating are coated on two side surfaces of the base film to manufacture the separator 310, which is split into corresponding width according to a design size for later use.

S40: alternately stacking the positive electrode sheets 100 and the negative electrode sheets 200, and interposing the separator 310 between the positive electrode sheets 100 and the negative electrode sheets 200 that are adjacent to each other. Optionally, a lamination process may use a Z-shaped laminating mode, a single-sheet laminating mode, a manner that the separator 310 and the positive electrode sheet 100 are thermally compounded in advance and then laminated with the negative electrode sheet 200, or a manner that the separator 310 and the negative electrode sheet 200 are thermally compounded in advance and then laminated with the positive electrode sheet 100.

S50: electrically connecting the plurality of positive electrode current collectors 110 to each other; and electrically connecting the plurality of negative electrode current collectors 210 to each other. Optionally, the electrical connection may be implemented by means of welding or metal spraying, which is not specifically limited herein.

S60: encasing the cell and encapsulating the same. The bare cell is put into a shell. After the positive and negative tabs are welded to poles of the shell, a top cover is laser-welded, and then sealing detection and moisture baking are carried out.

It can be understood that, according to different actual use conditions or different selection of lamination processes, the positive electrode sheet 100 may be a double-sided positive electrode sheet 10, as shown in FIG. 9, and the first coating 105 is provided on two surfaces of the first base material 107; it is also possible that the positive electrode sheet 100 is a single-side positive electrode plate 30, as shown in FIG. 10, and the first coating 105 is provided only on one surface of the first base material 107. The negative electrode sheet 200 may be a double-sided negative electrode sheet 20, as shown in FIG. 11, and the second coating 205 is provided on two surfaces of the second base material 207; it is also possible that negative electrode sheet 200 is a single-side negative electrode plate 40, as shown in FIG. 12, and the second coating 205 is provided only on one surface of the second base material 207.

When the single-sheet laminating mode is used, as shown in FIG. 8, optionally, the double-sided positive electrode sheets 10 and the double-sided negative electrode sheets 20 are alternately stacked, optionally, the outermost layers (bottom layer and top layer) are respectively provided with a layer of separator 310, and the single-side negative electrode sheet 40 is provided above the bottom layer of separator 310, the single-sided positive electrode sheet 30 is provided below the top layer of separator 310, and the double-sided positive electrode sheets 10 and the double-sided negative electrode sheets 20 are alternately provided between the single-sided negative electrode sheet 40 and the single-sided positive electrode sheet 30, and a positive electrode sheet 100 and a negative electrode sheet 200 that are adjacent are separated by a layer of separator 310. Finally, the positive electrode current collectors 110 located on one long side are welded or metal-sprayed to realize the electrical conduction, and the negative electrode current collectors 210 located on the other long side are welded or metal-sprayed to realize the electrical conduction, thus obtaining a semi-finished bare cell.

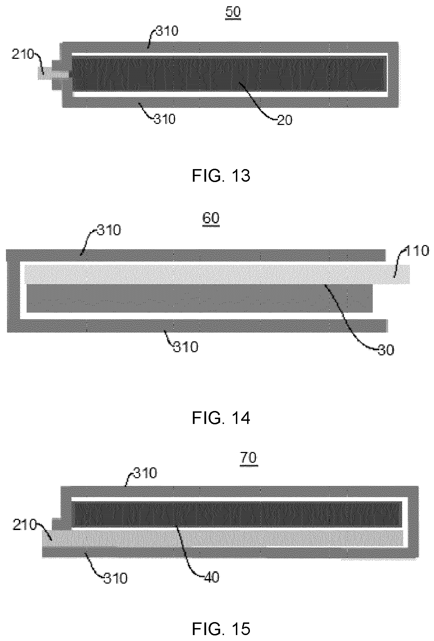

Alternatively, the positive electrode sheet 100 or the negative electrode sheet 200 and the separator 310 also may be thermally compounded in advance to obtain a compound unit, and then lamination is performed. The positive electrode sheet 100 and the separator 310 are hot-pressed to obtain a first compound unit which is then laminated with the negative electrode sheet 200. Alternatively, the negative electrode sheet 200 and the separator 310 are hot-pressed to obtain a second compound unit which is then laminated with the positive electrode sheet 100. Optionally, FIG. 13 is a schematic view of a sectional structure of a first thermal compound unit 50 of two layers of separators 310 and the double-sided negative electrode sheet 20, FIG. 14 is a schematic view of a sectional structure of a second thermal compound unit 60 of two layers of separators 310 and the single-sided positive electrode sheet 30, and FIG. 15 is a schematic view of a sectional structural of a third thermal compound unit 70 of the two layers of separators 310 and the single-sided negative electrode sheet 40.

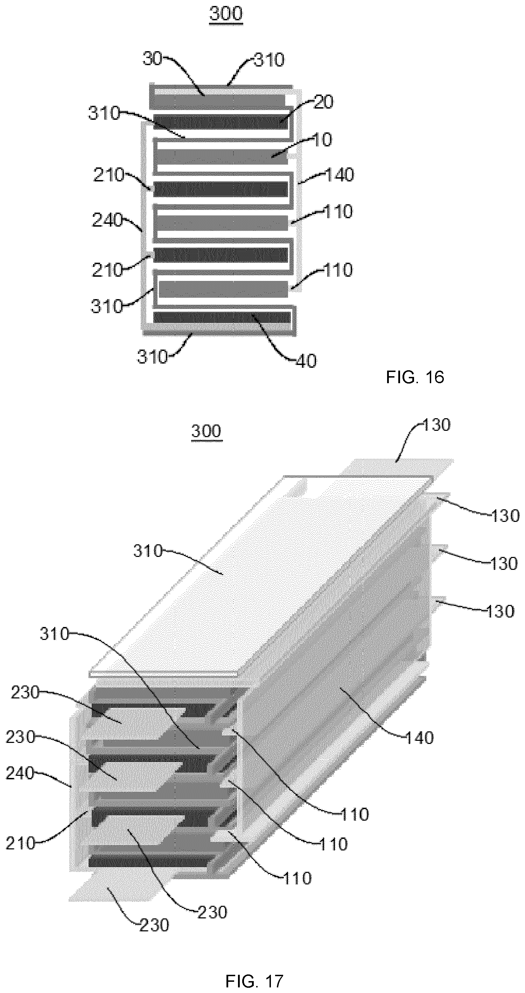

FIG. 16 and FIG. 17 show schematic views of laminated cell 300 obtained in a Z-shaped laminating mode. After the lamination, the double-sided positive electrode sheets 10 and the double-sided negative electrode plates 20 are alternately stacked, and a positive electrode sheet 100 and a negative electrode sheet 200 that are adjacent are provided with the separator 310 therebetween at intervals. Finally, all of the positive electrode current collectors 110 on one long side are welded or metal-sprayed to realize the electrical conduction, and all of the negative electrode current collectors 210 on the other long side are welded or metal-sprayed to realize the electrical conduction.

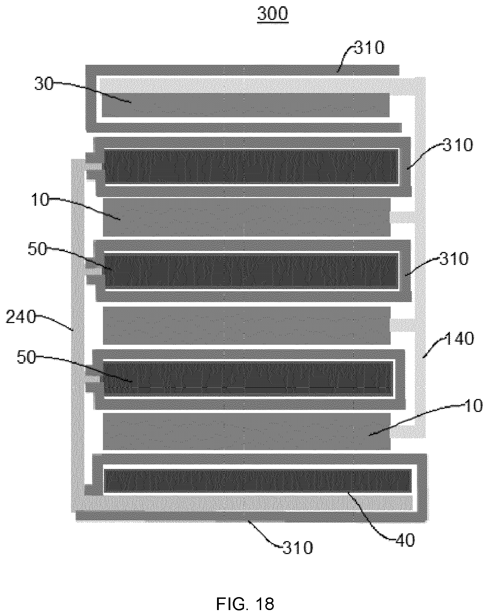

As shown in FIG. 18, two layers of separators 310 and the double-sided negative electrode sheets 20 are used to obtain the first thermal compound units 50, which are then laminated with the double-sided positive electrode sheets 10 to obtain the laminated cell 300, wherein after the lamination, the double-sided positive electrode sheets 10 and the double-sided negative electrode sheets 20 are alternately stacked, and are separated by the two layers of separators 310 of the compound units, thus achieving the insulating effect.

Hereinafter, the description is made with reference to specific manufacturing embodiments.

### Embodiment 1

### (1) Preparing a positive electrode sheet 100.

A positive electrode active material NMC (811), a conductive agent carbon black SP (TIMCAL), and a binder PVDF (Arkema) are mixed according to a mass ratio of 96:2:2, a solvent NMP is added, and the mixture is stirred with a stirrer to form a uniform and stable positive electrode slurry; the positive electrode slurry is uniformly coated onto an aluminum foil in accordance with grid-shaped coating, and during the coating, a margin is left around four edges of the coating, where no coating is provided; the positive electrode slurry is dried, and then rolled, split, and film-cut to obtain the positive electrode sheet 100 as shown in FIG. 2 and FIG. 3.

### (2) Preparing a negative electrode sheet 200.

A negative electrode active material graphite, a conductive agent acetylene black, a thickening agent CMC, and a binder SBR are mixed according to a mass ratio of 96.5:0.5:1.5:1.5, then a solvent deionized water is added, and the mixture is stirred in a stirrer to obtain a uniform and stable negative electrode slurry; the negative electrode slurry is uniformly coated on a copper foil in accordance with grid-shaped coating, and during the coating, a margin is left around four edges of the coating, where no coating is provided; the negative electrode slurry is dried, and then rolled, split, and film-cut to obtain the negative electrode sheet 200 as shown in FIG. 4 and FIG. 5.

### (3) Preparing a separator 310.

A polyethylene porous film is selected as a base film, and a ceramic coating and a PVDF sticky coating are coated on two side surfaces thereof to manufacture the separator 310, which is cut into corresponding width according to design dimension for later use.

### (4) Preparing an electrolytic solution.

Ethylene carbonate (EC), ethyl methyl carbonate (EMC), and diethyl carbonate (DEC) are mixed according to a volume ratio of 1:1:1 to obtain an organic solvent, and then sufficiently dried lithium salt LiPF₆ is dissolved in the mixed solvent to formulate the electrolyte solution with a concentration about 1 mol/L.

### (5) Preparing a bare cell of a lithium-ion battery.

The above positive electrode sheets 100, separators 310, and negative electrode sheets 200 are stacked in a Z-shaped laminating mode according to the structure shown in FIG. 6, so that the separators 310 are located between the positive electrode sheet 100 and negative electrode sheet 200 that are adjacent to achieve an isolating function. The single-sided positive electrode sheet 30 and the single-sided negative electrode sheet 40 wrapped by the separator 310 are used at the outermost layers. A semi-finished bare cell is formed by hot pressing.

### (6) Welding tabs for the bare cell.

The positive electrode current collectors 110 on the long sides of all layers of the semi-finished bare cell are welded at a position closest to a side edge of the electrode sheets, the margin aluminum foil on the side of first tab 130 is welded at a position closest to the edge of the electrode sheet, so that all layers of aluminum foils are welded together, and excess aluminum foils outside welding mark are cut off after the welding, and the bent blank aluminum foils are stuck to a side surface of the cell 300 with an insulating tape, to prevent the blank aluminum foils on the long side and the tab side from occupying spaces. Likewise, the negative electrode current collectors 210 on the other long sides of all layers and the margin copper foil on the side of second tab 230 are processed according to the same method as the above. Finally, the first tabs 130 (aluminum foil tabs) of all layers are pre-welded together and then welded with the positive tabs; the second tabs 230 (copper foil tabs) of all layers are pre-welded together and then welded with the negative tabs, thus obtaining the bare cell as shown in FIG. 16 and FIG. 17.

### (7) Encasing the bare cell and encapsulating the same.

The bare cell is put into an aluminum-shell outer package. After the positive and negative tabs are welded to poles of the shell, a top cover is laser-welded; and then sealing detection and moisture baking are performed.

### (8) Pouring a solution into the cell 300, forming, and testing.

After the cell 300 is poured with an electrolytic solution and infiltrated at a high temperature, formation, sealing, and testing of the cell 300 are performed, thus obtaining a finished lithium-ion battery.

### Embodiment 2

The positive electrode sheets 100, the negative electrode sheets 200, the separators 310, and the electrolyte solution are prepared according to the method in Embodiment 1. Firstly, the double-sided negative electrode sheet 20 and two layers of separators 310 are thermally compounded to obtain the first thermal compound unit 50 as shown in FIG. 13; the single-sided positive electrode sheet 30 and two layers of separators 310 are thermally compounded, to obtain the second thermal compound unit 60 as shown in FIG. 14; the single-sided negative electrode sheet 40 and two layers of separators 310 are thermally compounded to obtain the third thermal compound unit 70 as shown in FIG. 15, and then lamination is performed according to the structure shown in FIG. 7, and the first tab 130 and the second tab 230 are made to be located on the same short side, thus obtaining a semi-finished bare cell.

Then the positive electrode current collectors 110 on the long sides of all layers of the semi-finished bare cell are coated with a conductive slurry and dried, so that all layers of aluminum foils are conductively connected together; the margin aluminum foil (electrical conduction body) on the side of first tab 130 is coated with the conductive slurry and dried, so that all layers of aluminum foils are electrically connected together; then, a conductive layer is covered and pasted to a side surface of the cell 300 with an insulating tape, preventing the conductive layer from direct contact with the shell to be short-circuited. Likewise, the negative electrode current collectors 210 on the other long side of all layers and the margin copper foil at the side of second tab 230 are processed in the same method as the above. Finally, the first tabs 130 (aluminum foil tabs) of all layers are pre-welded together, and then the positive tabs are welded. The second tabs 230 (copper foil tabs) of all layers are pre-welded together and then welded with the negative tabs, thus obtaining the bare cell as shown in FIG. 18.

The bare cell is placed into an aluminum plastic composite film outer package, and after the positive and negative tabs and side encapsulation and top encapsulation of the shell are completed, sealing detection and moisture baking are performed. Then, the cell 300 undergoes solution injection, formation, and testing, thus obtaining a finished lithium-ion battery.

### Embodiment 3

The positive electrode sheets, the negative electrode sheets, the separators 310, and the electrolytic solution are prepared according to the method in Embodiment 1, and then single-sheet lamination is performed according to the structure shown in FIG. 6 to obtain a semi-finished bare cell.

Then positive electrode current collectors 110 (margin aluminum foils at edges) on the long sides of all layers of the semi-finished bare cell and the electrical conduction body (margin aluminum foils on the side of first tab 130) on the positive electrode sheet 100 are welded at a position closest to a side edge of the sheets, so that all layers of aluminum foils are welded together, and excess aluminum foils outside welding mark are cut off after the welding, and the bent blank aluminum foils are stuck to a side surface of the cell 300 with an insulating tape, to prevent the blank aluminum foils on the side and the tab side from occupying spaces. Likewise, the negative electrode current collectors 210 on the other long sides of all layers and the margin copper foil on the side of second tab 230 are processed according to the same method as the above. Finally, the first tabs 130 (aluminum foil tabs) of all layers are pre-welded together and then welded with the positive tabs. The second tabs 230 (copper foil tabs) of all layers are pre-welded together and then welded with the negative electrode tabs, thus obtaining the bare cell as shown in FIG. 8.

The bare cell is placed into an aluminum plastic composite film outer package, and after the positive and negative tabs and side encapsulation and top encapsulation of the shell are completed, sealing detection and moisture baking are completed. Then, the cell 300 undergoes solution injection, formation, and testing, thus obtaining a finished lithium-ion battery.

According to the method for manufacturing the cell 300 provided in the embodiments of the present disclosure, one long side and one short side of each positive electrode sheet 100 are respectively designed to leave the margin, i.e., the margin is left, the first tab 130 is provided on the short side of the base material designed to be blank, the margin on the long side serves as the positive electrode current collector 110 of the positive electrode sheet 100, and the margin on the short side serves as the electrical conduction body for the positive electrode current collector 110 and the first tab 130; one long side and one short side of each negative electrode sheet 200 are respectively designed to leave the margin, i.e., the margin is left, the second tab 230 is provided on the short side of the base material designed to be blank, the margin on the long side serves as the negative electrode current collector 210 of the negative electrode sheet 200, and the margin on the short side serves as the electrical conduction body for the negative electrode current collector 210 and the second tab 230. Finally, the positive electrode sheets 100 and the negative electrode sheets 200 are alternately stacked, and the margins on the long sides and the short sides of the positive electrode sheets 100 of all layers are electrically connected to each other by welding or metal-spraying, and the margins on the long sides and the short sides of the negative electrode sheets 200 of all layers are electrically connected to each other by welding or metal-spraying, thus obtaining the bare cell. The process is simple, has high production efficiency, is easy to assemble, can increase the current conduction paths and reduce the electron conduction distance of each layer of sheet, thereby achieving the purposes of reducing the internal resistance of the cell 300 and equalizing the current density, and improving the heat dissipation effect in the battery operation process.

The present embodiment further provides a battery, including a shell and the above cell 300, wherein the cell 300 is manufactured by the above manufacturing method. The shell has a dimension adapted to the dimension of the folded cell 300, and the cell 300 is arranged inside the shell. Optionally, the shell is an aluminum shell, insulating members are provided between all the connected positive electrode current collectors 110 and the shell, and insulating members are provided between all the connected negative electrode current collectors 210 and the shell, so as to prevent the positive electrode current collectors 110 or the negative electrode current collectors 210 from contact with the shell to be short-circuited.

In conclusion, the embodiments of the present disclosure provide the cell 300, the method for manufacturing the cell 300, and the battery, and have the beneficial effects in the following aspects.

According to the method for manufacturing the cell 300, the margin is left on one long side and one short side of each positive electrode sheet 100, the margin on the long side serves as the positive electrode current collector 110 of the positive electrode sheet 100, and the margin on the short side is configured to connect the first tab 130 at the short side and the positive electrode current collector 110. The margin is left on one long side and one short side of each negative electrode sheet 200, the margin on the long side serves as the negative electrode current collector 210 of the negative electrode sheet 200, and the margin on the short side is configured to connect the second tab 230 at the short side and the negative electrode current collector 210. This manufacturing process is simple, the production efficiency is high, the cell 300 manufactured by the manufacturing method can reduce the internal resistance, equalize the current density and temperature, and has good heat dissipation effect.

This battery, including the above cell 300, has a simple structure, is easy to assemble, and is especially suitable for the field of configuring a battery with a larger length-to-width ratio. By increasing the current conduction paths, reducing the electron conduction distance of each layer of sheet, the internal resistance of the power battery with a larger length-to-width ratio is reduced, the current density and the temperature are equalized, and the heat dissipation effect is improved as much as possible, while ensuring other battery performances such as energy density as much as possible. Moreover, this battery avoids waste of an internal space of the cell 300 as much as possible, does not need to change the design of a module or a pack, which can ensure to reduce the cost and improve the benefit while satisfying the output requirements.

The above-mentioned are merely specific embodiments of the present disclosure, but the scope of protection of the present invention is defined by the appended claims.

### Industrial Applicability

The cell 300 of the present disclosure can increase the current conduction channels, make the current distribution more uniform, reduce the resistance, and facilitate improving the heat dissipation effect.

The method for manufacturing the cell 300 in the present disclosure has a simple process and high production efficiency, can increase the current conduction paths and reduce the electron conduction distance of each layer of sheet, thereby achieving the purposes of reducing the internal resistance of the cell and equalizing the current density and temperature, and improving the heat dissipation effect in the battery operation process.

The battery in the present disclosure has a simple structure, is easy to assemble, and is especially applicable to the field of batteries with a larger length-to-width ratio. By increasing the current conduction paths, reducing the electron conduction distance of each layer of sheet, the internal resistance of the power battery with a larger length-to-width ratio is reduced, the current density and the temperature are equalized, and the heat dissipation effect is improved as much as possible, while ensuring other battery performances such as energy density as much as possible. Moreover, this battery avoids waste of an internal space of the cell 300 as much as possible, does not need to change the design of a module or a pack, which can ensure to reduce the cost and improve the benefit while satisfying the output requirements.

## Claims

1. A cell (300), comprising:
a separator (310);
a plurality of positive electrode sheets (100); and
a plurality of negative electrode sheets (200);
wherein the plurality of positive electrode sheets (100) and the plurality of negative electrode sheets (200) are alternately stacked; and the separator (310) is interposed between the plurality of positive electrode sheets (100) and the plurality of negative electrode sheets (200) that are adjacent to each other;
each of the plurality of positive electrode sheets (100) comprises two first long sides (101) provided opposite to each other and two first short sides (103) provided opposite to each other; one first long side (101) of the two first long sides (101) is provided with a margin base material, wherein the margin base material of the first long side (101) of the two first long sides (101) is a positive electrode current collector (110); one first short side (103) of the two first short sides (103) is provided with a first tab (130); the first short side (103) of the two first short sides (103) is further provided with a first margin base material (150), and the first margin base material (150) is located between the first tab (130) of the first short side (130) and the positive electrode current collector (110), wherein the first margin base material (150) is used for an electrical connection between the positive electrode current collector (110) and the first tab (130); and/or
each of the plurality of negative electrode sheets (200) comprises two second long sides (201) provided opposite to each other and two second short sides (203) provided opposite to each other; one second long side (201) of the two second long sides (201) is provided with a margin base material, wherein the margin base material of the second long side (201) of the two second long sides (201) is a negative electrode current collector (210); one second short side (203) of the two second short sides (203) is provided with a second tab (230); the second short side (203) of the two second short sides (203) is further provided with a second margin base material (250), and the second margin base material (250) is located between the second tab (230) and the negative electrode current collector (210), wherein the second margin base material (250) is used for an electrical connection between the negative electrode current collector (210) and the second tab (230).

2. The cell (300) according to claim 1, wherein after the plurality of positive electrode sheets (100) and the plurality of negative electrode sheets (200) are alternately stacked; the positive electrode current collector (110) of each of the plurality of the positive electrode sheets (100) is located at the same side; and the negative electrode current collector (210) of each of the plurality of negative electrode sheets (200) is located at a side opposite to the side where the positive electrode current collector (110) of each of the plurality of positive electrode sheets (100) is located; and
the first tab (130) of each of the plurality of positive electrode sheets (100) is located at the same side; and the second tab (230) of each of the plurality of negative electrode sheets (200) is located at a side same as or opposite to the side where the first tab (130) of each of the plurality of positive electrode sheets (100) is located.

3. The cell (300) according to claim 1, wherein each of the plurality of positive electrode sheets (100) is provided with one positive electrode current collector (110), and the positive electrode current collector (110) of each of the plurality of positive electrode sheets (100) is electrically connected to each other,
preferably, the cell (300) further comprises a first connecting substrate (140); the first connecting substrate (140) is welded or punched to the positive electrode current collector (110) of each of the plurality of positive electrode sheets (100), respectively, so as to allow the positive electrode current collector (110) of each of the plurality of positive electrode sheets (100) to be electrically connected to each other; or a metal layer is sprayed between the positive electrode current collector (110) of each of the plurality of positive electrode sheets (100), so as to allow the positive electrode current collector (110) of each of the plurality of positive electrode sheets (100) to be electrically connected to each other.

4. The cell (300) according to claim 1, wherein each of the plurality of negative electrode sheets (200) is provided with one negative electrode current collector (210); and the negative electrode current collector (210) of each of the plurality of negative electrode sheets (200) is electrically connected to each other,
preferably, the cell (300) further comprises a second connecting substrate (240); the second connecting substrate (240) is welded or punched to each of the plurality of negative electrode current collectors (210), respectively, so as to allow the negative electrode current collector (210) of each of the plurality of the negative electrode sheets (200) to be electrically connected to each other; or a metal layer is sprayed between the negative electrode current collector (210) of each of the plurality of negative electrode sheets (200), so as to allow the negative electrode current collector (210) of each of the plurality of the negative electrode sheets (200) to be electrically connected to each other.

5. The cell (300) according to claim 1, wherein the first tab (130) is provided in a middle of the first short side (103.

6. The cell (300) according to claim 1 or 5, wherein the first margin base material (150) is provided thereon with a conductive coating, so as to electrically connect the first tab (130) and the positive electrode current collector (110).

7. The cell (300) according to any one of claims 1-6,
wherein the second tab (230) is provided in a middle of the second short side (203); and
the second margin base material (250) is provided thereon with a conductive coating, so as to electrically connect the second tab (230) and the negative electrode current collector (210).

8. A method for manufacturing a cell (300), comprising
preparing positive electrode sheets (100), wherein each positive electrode sheet (100) of the positive electrode sheets (100) comprises two first long sides (101) provided opposite to each other and two first short sides (103) provided opposite to each other; one first long side (101) of the two first long sides (101) is provided with a positive electrode current collector (110); one first short side (103) of the two first short sides (103) is provided with a first tab (130); and the positive electrode current collector (110) is electrically connected to the first tab (130); and/or
preparing negative electrode sheets (200), wherein each negative electrode sheet (200) of the negative electrode sheets (200) comprises two second long sides (201) provided opposite to each other and two second short sides (203) provided opposite to each other; one second long side (201) of the two second long sides (201) is provided with a negative electrode current collector (210); one second short side (203) of the two second short sides (203) is provided with a second tab (230); and the negative electrode current collector (210) is electrically connected to the second tab (230);
preparing a separator (310); and
alternately stacking the positive electrode sheets (100) and the negative electrode sheets (200); and interposing the separator (310) between the positive electrode sheets (100) and the negative electrode sheets (200) that are adjacent to each other.

9. The method according to claim 8, wherein the step of preparing positive electrode sheets (100) comprises:
coating a positive electrode slurry on a first base material (107) in accordance with grid-shaped coating; leaving a margin around four edges of a coating formed with the positive electrode slurry on the first base material (107);
drying the first base material (107); and
rolling and cutting the first base material (107) to obtain the positive electrode sheets (100), so that the margin at the first long side (101) of each positive electrode sheet (100) of the positive electrode sheets (100) forms the positive electrode current collector (110); the margin at the first short side (103) of each positive electrode sheet (100) of the positive electrode sheets (100) forms the first tab (130) and a first margin base material (150); and the positive electrode current collector (110) and the first tab (130) are electrically connected to each other through the first margin base material (150).

10. The method according to claim 8, wherein the step of preparing negative electrode sheets (200) comprises:
coating a negative electrode slurry on a second base material (207) in accordance with grid-shaped coating; leaving a margin around four edges of a coating formed with the negative electrode slurry on the second base material (207);
drying the second base material (207); and
rolling and cutting the second base material (207) to obtain a negative electrode sheet (200), so that the margin at the second long side (201) of each negative electrode sheet (200) of the negative electrode sheets (200) forms the negative electrode current collector (210); the margin at the second short side (203) of each negative electrode sheet (200) of the negative electrode sheets (200) forms the second tab (230) and a second margin base material (250); and the negative electrode current collector (210) and the second tab (230) are electrically connected to each other through the second margin base material (250).

11. The method according to claim 8, wherein the step of alternately stacking the positive electrode sheets (100) and the negative electrode sheets (200) further comprises:
stacking the positive electrode current collector (110) of each positive electrode sheet (100) of the positive electrode sheets (100) at the same side, and stacking the negative electrode current collector (210) of each negative electrode sheet (200) of the negative electrode sheets (200) at a side opposite to the side where the positive electrode current collector (110) of each of the positive electrode sheets (100) is stacked; and
stacking the first tab (130) of each positive electrode sheet (100) of the positive electrode sheets (100) at the same side; and stacking the second tab (230) of each of the negative electrode sheets (200) at a side opposite to the side where the positive electrode current collector (110) of each of the positive electrode sheets (100) is stacked.

12. The method according to claim 8, after the step of alternately stacking the positive electrode sheets (100) and the negative electrode sheets (200), further comprising:
electrically connecting the positive electrode current collector (110) of each positive electrode sheet (100) of the positive electrode sheets (100) to each other; and
electrically connecting the negative electrode current collector (210) of each negative electrode sheet (200) of the negative electrode sheets (200) to each other,
preferably, the step of electrically connecting the positive electrode current collector (110) of each positive electrode sheet (100) of the positive electrode sheets (100) to each other comprises: providing a first connecting substrate (140); and electrically connecting the positive electrode current collector (110) of each positive electrode sheet (100) of the positive electrode sheets (100) to the first connecting substrate (140); and
the step of electrically connecting the negative electrode current collector (210) of each negative electrode sheet (200) of the negative electrode sheets (200) to each other comprises: providing a second connecting substrate (240); and electrically connecting each negative electrode current collector (210) to the second connecting substrate (240).

13. The method according to any one of claims 8-12, wherein the step of alternately stacking the positive electrode sheets (100) and the negative electrode sheets (200) comprises:
laminating a positive electrode sheet (100), the separator (310), and a negative electrode sheet (200) in a single-sheet laminating mode to obtain a semi-finished bare cell (300); or
hot-pressing the positive electrode sheets (100) and the separator (310) to obtain a first compound unit, and laminating the first compound unit with the negative electrode sheets (200) to obtain a semi-finished bare cell (300); or
hot-pressing the negative electrode sheets (200) and the separator (310) to obtain a second compound unit, and laminating the second compound unit with the positive electrode sheets (100) to obtain a semi-finished bare cell (300).

14. A battery, **characterized by** comprising a shell and the cell (300) according to any one of claims 1-5, wherein the cell (300) is provided in the shell.

## Patentansprüche

1. Zelle (300), umfassend:
einen Separator (310);
eine Vielzahl von positiven Elektrodenplatten (100); und
eine Vielzahl von negativen Elektrodenplatten (200);
wobei die Vielzahl von positiven Elektrodenplatten (100) und die Vielzahl von negativen Elektrodenplatten (200) abwechselnd gestapelt sind; und der Separator (310) zwischen der Vielzahl von positiven Elektrodenplatten (100) und der Vielzahl von negativen Elektrodenplatten (200) eingefügt ist, die aneinander angrenzen;
jede der Vielzahl von positiven Elektrodenplatten (100) zwei erste lange Seiten (101), die einander gegenüberliegend bereitgestellt sind, und zwei erste kurze Seiten (103) umfasst, die einander gegenüberliegend bereitgestellt sind; eine erste lange Seite (101) der zwei ersten langen Seiten (101) mit einem Randbasismaterial bereitgestellt ist, wobei das Randbasismaterial der ersten langen Seite (101) der zwei ersten langen Seiten (101) ein positiver Elektrodenstromkollektor (110) ist; eine erste kurze Seite (103) der zwei ersten kurzen Seiten (103) mit einer ersten Lasche (130) bereitgestellt ist; die erste kurze Seite (103) der zwei ersten kurzen Seiten (103) ferner mit einem ersten Randbasismaterial (150) bereitgestellt ist und das erste Randbasismaterial (150) sich zwischen der ersten Lasche (130) der ersten kurzen Seite (130) und dem positiven Elektrodenstromkollektor (110) befindet, wobei die erste Randbasismaterial (150) für eine elektrische Verbindung zwischen dem positiven Elektrodenstromkollektor (110) und der ersten Lasche (130) verwendet wird; und/oder
jede der Vielzahl von negativen Elektrodenplatten (200) zwei zweite lange Seiten (201), die einander gegenüberliegend bereitgestellt sind, und zwei zweite kurze Seiten (203) umfasst, die einander gegenüberliegend bereitgestellt sind; eine zweite lange Seite (201) der zwei zweiten langen Seiten (201) mit einem Randbasismaterial bereitgestellt ist, wobei das Randbasismaterial der zweiten langen Seite (201) der zwei zweiten langen Seiten (201) ein negativer Elektrodenstromkollektor (210) ist; eine zweite kurze Seite (203) der zwei zweiten kurzen Seiten (203) mit einer zweiten Lasche (230) bereitgestellt ist; die zweite kurze Seite (203) der zwei zweiten kurzen Seiten (203) ferner mit einem zweiten Randbasismaterial (250) bereitgestellt ist und das zweite Randbasismaterial (250) sich zwischen der zweiten Lasche (230) und dem negativen Elektrodenstromkollektor (210) befindet, wobei das zweite Randbasismaterial (250) für eine elektrische Verbindung zwischen dem negativen Elektrodenstromkollektor (210) und der zweiten Lasche (230) verwendet wird.

2. Zelle (300) nach Anspruch 1, wobei, nachdem die Vielzahl von positiven Elektrodenplatten (100) und die Vielzahl von negativen Elektrodenplatten (200) abwechselnd gestapelt sind; der positive Elektrodenstromkollektor (110) jeder der Vielzahl der positiven Elektrodenplatten (100) sich auf derselben Seite befindet; und der negative Elektrodenstromkollektor (210) jeder der Vielzahl von negativen Elektrodenplatten (200) sich auf einer Seite befindet, die der Seite gegenüberliegt, auf der sich der positive Elektrodenstromkollektor (110) jeder der Vielzahl von positiven Elektrodenplatten (100) befindet; und
die erste Lasche (130) jeder der Vielzahl von positiven Elektrodenplatten (100) sich auf derselben Seite befindet; und die zweite Lasche (230) jeder der Vielzahl von negativen Elektrodenplatten (200) sich auf derselben Seite oder auf der Seite gegenüber der Seite befindet, auf der sich die erste Lasche (130) jeder der Vielzahl von positiven Elektrodenplatten (100) befindet.

3. Zelle (300) nach Anspruch 1, wobei jede der Vielzahl von positiven Elektrodenplatten (100) mit einem positiven Elektrodenstromkollektor (110) bereitgestellt ist und der positive Elektrodenstromkollektor (110) jeder der Vielzahl von positiven Elektrodenplatten (100) miteinander elektrisch verbunden ist,
die Zelle (300) vorzugsweise ferner ein erstes Verbindungssubstrat (140) umfasst; das erste Verbindungssubstrat (140) jeweils an den positiven Elektrodenstromkollektor (110) jeder der Vielzahl von positiven Elektrodenplatten (100) geschweißt oder gestanzt ist, um zu ermöglichen, den positiven Elektrodenstromkollektor (110) jeder der Vielzahl von positiven Elektrodenplatten (100) miteinander elektrisch zu verbinden; oder eine Metallschicht zwischen en positiven Elektrodenstromkollektor (110) jeder der Vielzahl von positiven Elektrodenplatten (100) gesprüht ist, um zu ermöglichen, den positiven Elektrodenstromkollektor (110) jeder der Vielzahl von positiven Elektrodenplatten (100) miteinander elektrisch zu verbinden.

4. Zelle (300) nach Anspruch 1, wobei jede der Vielzahl von negativen Elektrodenplatten (200) mit einem negativen Elektrodenstromkollektor (210) bereitgestellt ist und der negative Elektrodenstromkollektor (210) jeder der Vielzahl von negativen Elektrodenplatten (200) elektrisch miteinander verbunden ist,
die Zelle (300) vorzugsweise ferner ein zweites Verbindungssubstrat (240) umfasst; das zweite Verbindungssubstrat (240) jeweils an jeden der Vielzahl von negativen Elektrodenstromkollektoren (210) geschweißt oder gestanzt wird, um zu ermöglichen, den negativen Elektrodenstromkollektor (210) jeder der Vielzahl der negativen Elektrodenplatten (200) miteinander elektrisch zu verbinden; oder eine Metallschicht zwischen den negativen Elektrodenstromkollektor (210) jeder der Vielzahl von negativen Elektrodenplatten (200) gesprüht ist, um zu ermöglichen, den negativen Elektrodenstromkollektor (210) jeder der Vielzahl der negativen Elektrodenplatten (200) miteinander elektrisch zu verbinden.

5. Zelle (300) nach Anspruch 1, wobei die erste Lasche (130) in einer Mitte der ersten kurzen Seite (103) bereitgestellt ist.

6. Zelle (300) nach Anspruch 1 oder 5, wobei das erste Randbasismaterial (150) darauf mit einer leitfähigen Beschichtung bereitgestellt ist, um die erste Lasche (130) und den positiven Elektrodenstromkollektor (110) elektrisch zu verbinden.

7. Zelle (300) nach einem der Ansprüche 1 bis 6,
wobei die zweite Lasche (230) in einer Mitte der zweiten kurzen Seite (203) bereitgestellt ist; und
das zweite Randbasismaterial (250) darauf mit einer leitfähigen Beschichtung bereitgestellt ist, um die zweite Lasche (230) und den negativen Elektrodenstromkollektor (210) elektrisch zu verbinden.

8. Verfahren zum Fertigen einer Zelle (300), umfassend
Herstellen von positiven Elektrodenplatten (100), wobei jede positive Elektrodenplatte (100) der positiven Elektrodenplatten (100) zwei erste lange Seiten (101), die einander gegenüberliegend bereitgestellt sind, und zwei erste kurze Seiten (103) umfasst, die einander gegenüberliegend bereitgestellt sind; eine erste lange Seite (101) der zwei ersten langen Seiten (101) mit einem positiven Elektrodenstromkollektor (110) bereitgestellt ist; eine erste kurze Seite (103) der zwei ersten kurzen Seiten (103) mit einer ersten Lasche (130) bereitgestellt ist; und der positive Elektrodenstromkollektor (110) mit der ersten Lasche (130) elektrisch verbunden ist; und/oder
Herstellen von negativen Elektrodenplatten (200), wobei jede negative Elektrodenplatte (200) der negativen Elektrodenplatten (200) zwei zweite lange Seiten (201), die einander gegenüberliegend bereitgestellt sind, und zwei zweite kurze Seiten (203) umfasst, die einander gegenüberliegend bereitgestellt sind; eine zweite lange Seite (201) der zwei zweiten langen Seiten (201) mit einem negativen Elektrodenstromkollektor (210) bereitgestellt ist; eine zweite kurze Seite (203) der zwei zweiten kurzen Seiten (203) mit einer zweiten Lasche (230) bereitgestellt ist; und der negative Elektrodenstromkollektor (210) mit der zweiten Lasche (230) elektrisch verbunden ist;
Herstellen eines Separators (310); und
abwechselndes Stapeln der positiven Elektrodenplatten (100) und der negativen Elektrodenplatten (200); und Einfügen des Separators (310) zwischen die positiven Elektrodenplatten (100) und die negativen Elektrodenplatten (200), die aneinander angrenzen.

9. Verfahren nach Anspruch 8, wobei der Schritt des Herstellens positiver Elektrodenplatten (100) umfasst:
Beschichten eines ersten Basismaterials (107) mit einer Aufschlämmung für eine positive Elektrode gemäß einer gitterförmigen Beschichtung; Freilassen eines Randes um vier Kanten einer Beschichtung, die mit der Aufschlämmung für eine positive Elektrode auf dem ersten Basismaterial (107) gebildet ist;
Trocknen des ersten Basismaterials (107); und
Walzen und Schneiden des ersten Basismaterials (107), um die positiven Elektrodenplatten (100) zu erhalten, sodass der Rand auf der ersten langen Seite (101) jeder positiven Elektrodenplatte (100) der positiven Elektrodenplatten (100) den positiven Elektrodenstromkollektor (110) bildet; der Rand auf der ersten kurzen Seite (103) jeder positiven Elektrodenplatte (100) der positiven Elektrodenplatten (100) die erste Lasche (130) und ein erstes Randbasismaterial (150) bildet; und der positive Elektrodenstromkollektor (110) und die erste Lasche (130) durch das erste Randbasismaterial (150) miteinander elektrisch verbunden sind.

10. Verfahren nach Anspruch 8, wobei der Schritt des Herstellens negativer Elektrodenplatten (200) umfasst:
Beschichten eines zweiten Basismaterials (207) mit einer Aufschlämmung für eine negative Elektrode gemäß einer gitterförmigen Beschichtung; Freilassen eines Randes um vier Kanten einer Beschichtung, die mit der Aufschlämmung für eine negative Elektrode auf dem zweiten Basismaterial (207) gebildet ist;
Trocknen des zweiten Basismaterials (207); und
Walzen und Schneiden des zweiten Basismaterials (207), um eine negative Elektrodenplatte (200) zu erhalten, sodass der Rand auf der zweiten langen Seite (201) jeder negativen Elektrodenplatte (200) der negativen Elektrodenplatte (200) den negativen Elektrodenstromkollektor (210) bildet; der Rand auf der zweiten kurzen Seite (203) jeder negativen Elektrodenplatte (200) der negative Elektrodenplatte (200) die zweite Lasche (230) und ein zweites Randbasismaterial (250) bildet; und der negative Elektrodenstromkollektor (210) und die zweite Lasche (230) durch das zweite Randbasismaterial (250) miteinander elektrisch verbunden sind.

11. Verfahren nach Anspruch 8, wobei der Schritt des abwechselnden Stapelns der positiven Elektrodenplatten (100) und der negativen Elektrodenplatten (200) ferner umfasst:
Stapeln des positiven Elektrodenstromkollektors (110) jeder positiven Elektrodenplatte (100) der positiven Elektrodenplatten (100) auf derselben Seite und Stapeln des negativen Elektrodenstromkollektors (210) jeder negativen Elektrodenplatte (200) der negativen Elektrodenplatten (200) auf einer Seite gegenüber der Seite, auf der der positive Elektrodenstromkollektor (110) jeder der positiven Elektrodenplatten (100) gestapelt ist; und
Stapeln der ersten Lasche (130) jeder positiven Elektrodenplatte (100) der positiven Elektrodenplatten (100) auf derselben Seite; und Stapeln der zweiten Lasche (230) jeder der negativen Elektrodenplatten (200) auf einer Seite gegenüber der Seite, auf der der positive Elektrodenstromkollektor (110) jeder der positiven Elektrodenplatten (100) gestapelt ist.

12. Verfahren nach Anspruch 8, nach dem Schritt des abwechselnden Stapelns der positiven Elektrodenplatten (100) und der negativen Elektrodenplatten (200), ferner umfassend:
elektrisches Verbinden des positiven Elektrodenstromkollektors (110) jeder positiven Elektrodenplatte (100) der positiven Elektrodenplatten (100) miteinander; und
elektrisches Verbinden des negativen Elektrodenstromkollektors (210) jeder negativen Elektrodenplatte (200) der negativen Elektrodenplatten (200) miteinander,
wobei der Schritt des elektrischen Verbindens des positiven Elektrodenstromkollektors (110) jeder positiven Elektrodenplatte (100) der positiven Elektrodenplatten (100) miteinander vorzugsweise umfasst: Bereitstellen eines ersten Verbindungssubstrats (140); und elektrisches Verbinden des positiven Elektrodenstromkollektors (110) jeder positiven Elektrodenplatte (100) der positiven Elektrodenplatten (100) mit dem ersten Verbindungssubstrat (140); und
der Schritt des elektrischen Verbindens des negativen Elektrodenstromkollektors (210) jeder negative Elektrodenplatte (200) der negative Elektrodenplatten (200) miteinander umfasst: Bereitstellen eines zweiten Verbindungssubstrats (240); und elektrisches Verbinden jedes negativen Elektrodenstromkollektors (210) mit dem zweiten Verbindungssubstrat (240).

13. Verfahren nach einem der Ansprüche 8 bis 12, wobei der Schritt des abwechselnden Stapelns der positiven Elektrodenplatten (100) und der negativen Elektrodenplatten (200) umfasst:
Laminieren einer positiven Elektrodenplatte (100), des Separators (310) und einer negativen Elektrodenplatte (200) in einem Einzelplatten-Laminiermodus, um eine halbfertige Rohzelle (300) zu erhalten; oder
Heißpressen der positiven Elektrodenplatten (100) und des Separators (310), um eine erste Verbundeinheit zu erhalten, und Laminieren der ersten Verbundeinheit mit den negativen Elektrodenplatten (200), um eine halbfertige Rohzelle (300) zu erhalten; oder
Heißpressen der negativen Elektrodenplatten (200) und des Separators (310), um eine zweite Verbundeinheit zu erhalten, und Laminieren der zweiten Verbundeinheit mit den positiven Elektrodenplatten (100), um eine halbfertige Rohzelle (300) zu erhalten.

14. Batterie, **dadurch gekennzeichnet, dass** sie ein Gehäuse und die Zelle (300) nach einem der Ansprüche 1 bis 5 umfasst, wobei die Zelle (300) in dem Gehäuse bereitgestellt ist.

## Revendications

1. Cellule (300), comprenant :
un séparateur (310) ;
une pluralité de feuilles d'électrode positive (100) ; et
une pluralité de feuilles d'électrode négative (200) ;
dans laquelle la pluralité de feuilles d'électrode positive (100) et la pluralité de feuilles d'électrode négative (200) sont empilées de manière alternée ; et le séparateur (310) est interposé entre la pluralité de feuilles d'électrode positive (100) et la pluralité de feuilles d'électrode négative (200) qui sont adjacentes les unes aux autres ;
chacune de la pluralité de feuilles d'électrode positive (100) comprend deux premiers côtés longs (101) situés à l'opposé l'un de l'autre et deux premiers côtés courts (103) situés à l'opposé l'un de l'autre ; un premier côté long (101) des deux premiers côtés longs (101) est pourvu d'un matériau de base de marge, dans laquelle le matériau de base de marge du premier côté long (101) des deux premiers côtés longs (101) est un collecteur de courant d'électrode positive (110) ; un premier côté court (103) des deux premiers côtés courts (103) est pourvu d'une première languette (130) ; le premier côté court (103) des deux premiers côtés courts (103) est en outre pourvu d'un premier matériau de base de marge (150), et le premier matériau de base de marge (150) est situé entre la première languette (130) du premier côté court (130) et le collecteur de courant d'électrode positive (110), dans laquelle le premier matériau de base de marge (150) est utilisé pour une connexion électrique entre le collecteur de courant d'électrode positive (110) et la première languette (130) ; et/ou
chacune de la pluralité de feuilles d'électrode négative (200) comprend deux seconds côtés longs (201) situés à l'opposé l'un de l'autre et deux seconds côtés courts (203) situés à l'opposé l'un de l'autre ; un second côté long (201) des deux seconds côtés longs (201) est pourvu d'un matériau de base de marge, dans laquelle le matériau de base de marge du second côté long (201) des deux seconds côtés longs (201) est un collecteur de courant d'électrode négative (210) ; un second côté court (203) des deux seconds côtés courts (203) est pourvu d'une seconde languette (230) ; le second côté court (203) des deux seconds côtés courts (203) est en outre pourvu d'un second matériau de base de marge (250), et le second matériau de base de marge (250) est situé entre la seconde languette (230) et le collecteur de courant d'électrode négative (210), dans laquelle le second matériau de base de marge (250) est utilisé pour une connexion électrique entre le collecteur de courant d'électrode négative (210) et la seconde languette (230).

2. Cellule (300) selon la revendication 1, dans laquelle après que la pluralité de feuilles d'électrode positive (100) et la pluralité de feuilles d'électrode négative (200) sont empilées de manière alternée ; le collecteur de courant d'électrode positive (110) de chacune de la pluralité des feuilles d'électrode positive (100) est situé du même côté ; et le collecteur de courant d'électrode négative (210) de chacune de la pluralité de feuilles d'électrode négative (200) est situé sur un côté opposé au côté où le collecteur de courant d'électrode positive (110) de chacune de la pluralité de feuilles d'électrode positive (100) est situé ; et
la première languette (130) de chacune de la pluralité de feuilles d'électrode positive (100) est située du même côté ; et la seconde languette (230) de chacune de la pluralité de feuilles d'électrode négative (200) est située d'un côté identique ou opposé au côté où la première languette (130) de chacune de la pluralité de feuilles d'électrode positive (100) est située.

3. Cellule (300) selon la revendication 1, dans laquelle chacune de la pluralité de feuilles d'électrode positive (100) est pourvue d'un collecteur de courant d'électrode positive (110), et les collecteurs de courant d'électrode positive (110) de chacune de la pluralité de feuilles d'électrode positive (100) sont connectés électriquement les uns aux autres,
de préférence, la cellule (300) comprend en outre un premier substrat de connexion (140) ; le premier substrat de connexion (140) est soudé ou poinçonné sur le collecteur de courant d'électrode positive (110) de chacune de la pluralité de feuilles d'électrode positive (100), respectivement, de manière à permettre aux collecteurs de courant d'électrode positive (110) de chacune de la pluralité de feuilles d'électrode positive (100) d'être connectés électriquement les uns aux autres ; ou une couche métallique est pulvérisée entre le collecteur de courant d'électrode positive (110) de chacune de la pluralité de feuilles d'électrode positive (100), de manière à permettre aux collecteurs de courant d'électrode positive (110) de chacune de la pluralité de feuilles d'électrode positive (100) d'être connectés électriquement les uns aux autres.

4. Cellule (300) selon la revendication 1, dans laquelle chacune de la pluralité de feuilles d'électrode négative (200) est pourvue d'un collecteur de courant d'électrode négative (210) ; et les collecteurs de courant d'électrode négative (210) de chacune de la pluralité de feuilles d'électrode négative (200) sont connectés électriquement les uns aux autres,
de préférence, la cellule (300) comprend en outre un second substrat de connexion (240) ; le second substrat de connexion (240) est soudé ou poinçonné sur chacun de la pluralité de collecteurs de courant d'électrode négative (210), respectivement, de manière à permettre aux collecteurs de courant d'électrode négative (210) de chacune de la pluralité des feuilles d'électrode négative (200) d'être connectés électriquement les uns aux autres ; ou une couche métallique est pulvérisée entre le collecteur de courant d'électrode négative (210) de chacune de la pluralité de feuilles d'électrode négative (200), de manière à permettre aux collecteurs de courant d'électrode négative (210) de chacune de la pluralité des feuilles d'électrode négative (200) d'être connectés électriquement les uns aux autres.

5. Cellule (300) selon la revendication 1, dans laquelle la première languette (130) est située au milieu du premier côté court (103.

6. Cellule (300) selon la revendication 1 ou 5, dans laquelle le premier matériau de base de marge (150) est pourvu sur celui-ci d'un revêtement conducteur, de manière à connecter électriquement la première languette (130) et le collecteur de courant d'électrode positive (110).

7. Cellule (300) selon l'une quelconque des revendications 1 à 6,
dans laquelle la seconde languette (230) est située au milieu du second côté court (203) ; et
le second matériau de base de marge (250) est pourvu sur celui-ci d'un revêtement conducteur, de manière à connecter électriquement la seconde languette (230) et le collecteur de courant d'électrode négative (210).

8. Procédé de fabrication d'une cellule (300), comprenant
la préparation de feuilles d'électrode positive (100), dans lequel chaque feuille d'électrode positive (100) des feuilles d'électrode positive (100) comprend deux premiers côtés longs (101) situés à l'opposé l'un de l'autre et deux premiers côtés courts (103) situés à l'opposé l'un de l'autre ; un premier côté long (101) des deux premiers côtés longs (101) est pourvu d'un collecteur de courant d'électrode positive (110) ; un premier côté court (103) des deux premiers côtés courts (103) est pourvu d'une première languette (130) ; et le collecteur de courant d'électrode positive (110) est connecté électriquement à la première languette (130) ; et/ou
la préparation de feuilles d'électrode négative (200), dans lequel chaque feuille d'électrode négative (200) des feuilles d'électrode négative (200) comprend deux seconds côtés longs (201) situés à l'opposé l'un de l'autre et deux seconds côtés courts (203) situés à l'opposé l'un de l'autre ; un second côté long (201) des deux seconds côtés longs (201) est pourvu d'un collecteur de courant d'électrode négative (210) ; un second côté court (203) des deux seconds côtés courts (203) est pourvu d'une seconde languette (230) ; et le collecteur de courant d'électrode négative (210) est connecté électriquement à la seconde languette (230) ;
la préparation d'un séparateur (310) ; et
l'empilement de manière alternée des feuilles d'électrode positive (100) et des feuilles d'électrode négative (200) ; et l'interposition du séparateur (310) entre les feuilles d'électrode positive (100) et les feuilles d'électrode négative (200) qui sont adjacentes les unes aux autres.

9. Procédé selon la revendication 8, dans lequel l'étape de préparation de feuilles d'électrode positive (100) comprend :
l'application d'une suspension d'électrode positive sur un premier matériau de base (107) selon un revêtement en forme de grille ; le fait de laisser une marge autour de quatre bords d'un revêtement formé avec la suspension d'électrode positive sur le premier matériau de base (107) ;
le séchage du premier matériau de base (107) ; et
le laminage et la découpe du premier matériau de base (107) pour obtenir les feuilles d'électrode positive (100), de sorte que la marge au niveau du premier côté long (101) de chaque feuille d'électrode positive (100) des feuilles d'électrode positive (100) forme le collecteur de courant d'électrode positive (110) ; la marge au niveau du premier côté court (103) de chaque feuille d'électrode positive (100) des feuilles d'électrode positive (100) forme la première languette (130) et un premier matériau de base de marge (150) ; et le collecteur de courant d'électrode positive (110) et la première languette (130) sont connectés électriquement l'un à l'autre par l'intermédiaire du premier matériau de base de marge (150).

10. Procédé selon la revendication 8, dans lequel l'étape de préparation de feuilles d'électrode négative (200) comprend :
l'application d'une suspension d'électrode négative sur un second matériau de base (207) selon un revêtement en forme de grille ; le fait de laisser une marge autour de quatre bords d'un revêtement formé avec la suspension d'électrode négative sur le second matériau de base (207) ;
le séchage du second matériau de base (207) ; et
le laminage et la découpe du second matériau de base (207) pour obtenir une feuille d'électrode négative (200), de sorte que la marge au niveau du second côté long (201) de chaque feuille d'électrode négative (200) des feuilles d'électrode négative (200) forme le collecteur de courant d'électrode négative (210) ; la marge au niveau du second côté court (203) de chaque feuille d'électrode négative (200) des feuilles d'électrode négative (200) forme la seconde languette (230) et un second matériau de base de marge (250) ; et le collecteur de courant d'électrode négative (210) et la seconde languette (230) sont connectés électriquement l'un à l'autre par l'intermédiaire du second matériau de base de marge (250).

11. Procédé selon la revendication 8, dans lequel l'étape d'empilement alterné des feuilles d'électrode positive (100) et des feuilles d'électrode négative (200) comprend en outre :
l'empilement du collecteur de courant d'électrode positive (110) de chaque feuille d'électrode positive (100) des feuilles d'électrode positive (100) du même côté, et l'empilement du collecteur de courant d'électrode négative (210) de chaque feuille d'électrode négative (200) des feuilles d'électrode négative (200) d'un côté opposé au côté où le collecteur de courant d'électrode positive (110) de chacune des feuilles d'électrode positive (100) est empilé ; et
l'empilement de la première languette (130) de chaque feuille d'électrode positive (100) des feuilles d'électrode positive (100) du même côté ; et l'empilement de la seconde languette (230) de chacune des feuilles d'électrode négative (200) d'un côté opposé au côté où le collecteur de courant d'électrode positive (110) de chacune des feuilles d'électrode positive (100) est empilé.

12. Procédé selon la revendication 8, après l'étape d'empilement alterné des feuilles d'électrode positive (100) et des feuilles d'électrode négative (200), comprenant en outre :
la connexion électrique du collecteur de courant d'électrode positive (110) de chaque feuille d'électrode positive (100) des feuilles d'électrode positive (100) les uns aux autres ; et
la connexion électrique du collecteur de courant d'électrode négative (210) de chaque feuille d'électrode négative (200) des feuilles d'électrode négative (200) les uns aux autres,
de préférence, l'étape de connexion électrique du collecteur de courant d'électrode positive (110) de chaque feuille d'électrode positive (100) des feuilles d'électrode positive (100) les uns aux autres comprend : la fourniture d'un premier substrat de connexion (140) ; et la connexion électrique du collecteur de courant d'électrode positive (110) de chaque feuille d'électrode positive (100) des feuilles d'électrode positive (100) au premier substrat de connexion (140) ; et
l'étape de connexion électrique du collecteur de courant d'électrode négative (210) de chaque feuille d'électrode négative (200) des feuilles d'électrode négative (200) les uns aux autres comprend : la fourniture d'un second substrat de connexion (240) ; et la connexion électrique de chaque collecteur de courant d'électrode négative (210) au second substrat de connexion (240).

13. Procédé selon l'une quelconque des revendications 8 à 12, dans lequel l'étape d'empilement alterné des feuilles d'électrode positive (100) et des feuilles d'électrode négative (200) comprend :
le laminage d'une feuille d'électrode positive (100), du séparateur (310), et d'une feuille d'électrode négative (200) dans un mode de laminage à feuille unique pour obtenir une cellule nue semi-finie (300) ; ou
le pressage à chaud des feuilles d'électrode positive (100) et du séparateur (310) pour obtenir une première unité composée, et le laminage de la première unité composée avec les feuilles d'électrode négative (200) pour obtenir une cellule nue semi-finie (300) ; ou
le pressage à chaud des feuilles d'électrode négative (200) et du séparateur (310) pour obtenir une seconde unité composée, et le laminage de la seconde unité composée avec les feuilles d'électrode positive (100) pour obtenir une cellule nue semi-finie (300).

14. Batterie, **caractérisée en ce qu'**elle comprend un boîtier et la cellule (300) selon l'une quelconque des revendications 1 à 5, dans laquelle la cellule (300) est disposée dans le boîtier.
